# EUROPÄISCHE PATENTSCHRIFT

(11) **EP 1 748 859 B1**
(45) Veröffentlichungstag und Bekanntmachung des Hinweises auf die Patenterteilung: **24.10.2007**
(21) Anmeldenummer: 05750638.8
(22) Anmeldetag: 13.05.2005
(51) Int. Cl.: B23B 51/02, B23B 51/00

(54) **BOHRER, INSBESONDERE SPIRALBOHRER**
DRILL, PARTICULARLY A SPIRAL DRILL
FORET, EN PARTICULIER FORET HELICOIDAL

(30) Priorität: 28.05.2004 DE 202004008700 U; 14.07.2004 DE 202004010977 U
(43) Veröffentlichungstag der Anmeldung: 07.02.2007
(73) Patentinhaber: KENNAMETAL INC., Latrobe, PA 15650-0231 (US)
(72) Erfinder: REINHARDT, Werner, 91364 Unterleinleiter (DE); KRIEG, Tilo, 90768 Fürth (DE)
(74) Vertreter: Dörr, Matthias
(86) Internationale Anmeldenummer: PCT/EP2005/005234
(87) Internationale Veröffentlichungsnummer: WO 2005/118191

(56) Entgegenhaltungen:
- EP-A- 0 089 123
- EP-A- 1 559 493
- DE-B- 1 177 904
- US-A- 5 626 446
- US-A- 5 700 113
- US-A- 6 135 681
- US-B1- 6 315 505

## Beschreibung

Die Erfindung betrifft einen Bohrer, insbesondere einen Spiralbohrer, mit einem Spannuten aufweisenden Körper sowie mit einer Bohrerstirn, die zwei ineinander übergehende Hauptschneiden aufweist, nach dem Oberbegriff des Anspruchs 1.

Ein derartiger Spiralbohrer umfasst gemäß der DIN ISO 5419 eine hier als Bohrerstirn bezeichnete Bohrerspitze, die im Wesentlichen die Schneidfunktionalität des Bohrers bereitstellt. An die Bohrerspitze schließt sich ein Körper an, in dem die insbesondere spiralförmig verlaufenden Spannuten eingearbeitet sind, die jeweils von einer Hauptschneide der Bohrerspitze ausgehen. In Bohrerlängsrichtung schließt sich an den Körper ein Schaft an, mit dem der Bohrer eingespannt und gehalten wird.

Bei einem herkömmlichen Spiralbohrer mit zwei Hauptschneiden sind diese unter einem spitzen Winkel zueinander angeordnet, wie er sich insbesondere aus der DIN 1414-1 ergibt. Die beiden Hauptschneiden sind über eine in der Bohrermitte angeordnete Querschneide miteinander verbunden. Im Bereich der Querschneide weist die Bohrerspitze eine Kerndicke auf. Die Querschneide ist zugleich der vorderste Punkt des Bohrers, von dem aus sich die Hauptschneiden sowie die sich daran anschließenden Freiflächen nach Art einer Kegelfläche anschließen.

Ein derartiger Spiralbohrer formt beim Bohren in ein Werkstück ein Bohrloch mit kegelförmigem Grund aus. Für bestimmte Anwendungsfälle werden jedoch Sacklöcher mit möglichst ebenem Lochgrund angestrebt. Derartige Sacklöcher sind mit einem herkömmlichen Spiralbohrer aufgrund der unter dem spitzen Winkel zueinander geneigten Hauptschneiden nicht möglich.

Aus der EP 0 089 123 A1 ist ein Bohrer zur Erzeugung eines Bohrlochs mit annähernd ebenem Lochgrund zu entnehmen. Bei diesem Bohrer ist eine in der Bohrermitte angeordnete primäre Schneide vorgesehen, die sich nur über einen Teilbereich des Bohrerdurchmessers erstreckt. An einer Seite schließt sich in Bohrerlängsrichtung zurückversetzt eine Sekundärschneide an, die von der primären Schneide bis zum Außenumfang des Bohrers reicht. Aufgrund der primären, vorstehenden Schneide ist auch mit diesem Bohrer keine vollkommen plane Fläche des Lochbodens erreichbar. Die vorstehende primäre Schneide ist hierbei zu Zentrierzwecken erforderlich.

Aus der DE-AS 1177 904 ist weiterhin ein Bohrnutenfräser zu entnehmen, welcher insgesamt an seiner Stirnseite vier Stirnschneiden aufweist, die jedoch untereinander Ober die Fräsermitte hinweg nicht miteinander verbunden sind. Ein derartiger Fräser eignet sich jedoch nicht zum Bohren, da aufgrund der fehlenden Schneide im Mittenbereich bei einer reinen Drehbewegung im Mittenbereich kein Spanabtrag erfolgt Der Fräser muss daher zwingend auch lateral verschoben werden.

Aus der US 6,135,681 ist ein Flachbohrer mit einem Schneideinsatz zu entnehmen, dessen Hauptschneiden in einer Ebene senkrecht zur Bohrerlängsachse verlaufen der die Merkmale des Oberbegriffes des Anspruchs 1 aufweist.

Der Erfindung liegt die Aufgabe zugrunde, ein Bohrwerkzeug oder einen Bohrer anzugeben, mit dem ein Sackloch mit ebenem, planem Lochboden ausgearbeitet werden kann.

Die Aufgabe wird erfindungsgemäß gelöst durch einen Bohrer gemäß Anspruch 1. Danach bilden die zwei Hauptschneiden der Bohrerstirn eine gemeinsame, durchgehende Schneide, die in einer Ebene senkrecht zur Bohrerlängsachse verläuft. Die beiden Hauptschneiden sind daher unter einem Winkel von 180° zueinander orientiert. Der Bohrer weist keine vorgelagerte Spitze auf, wodurch der Bohrlochgrund vollständig eben und plan ist. Die aus den Hauptschneiden gebildete Schneide erstreckt sich hierbei über den gesamten Bohrerdurchmesser. Die Hauptschneiden sind vorzugsweise symmetrisch zueinander und insbesondere punktsymmetrisch bezüglich der Bohrermitte angeordnet.

Ein besonderer Vorteil dieses als Flachbohrer ausgebildeten Bohrers ist darin zu sehen, dass zur Ausbildung von beispielsweise Sacklöchern mit vollkommen ebenem Lochgrund zumindest annähernd die gleichen Schnittparameter und die gleichen Prozess- und Bohrzeiten wie mit einem herkömmlichen Spiralbohrer mit kegelförmiger Bohrerspitze erreicht werden. Damit werden im Vergleich zu herkömmlichen Bohmutenfräsern, die üblicherweise nur eine Stirnschneide und einen starken Kemdurchmesser aufweisen, deutlich kürzere Prozesszeiten erreicht, d.h. die Bearbeitungszeit für die Erzeugung eines Sacklochs ist deutlich reduziert.

Mit dem Flachbohrer sind genaue Sacklochformen mit planem Bohrgrund insbesondere auch mit einer gestuften Bohrungswand (Stufenbohrung) problemlos und wirtschaftlich effizient ermöglicht. Zur Ausbildung einer Stufenbohrung, wie sie beispielsweise zur Ausbildung eines Ventilsitzes notwendig ist, weist der Flachbohrer um eine Stufentiefe gegenüber den Hauptschneiden zurückversetzte weitere sich radial nach Außen erstreckende Schneiden auf. Bei der Verwendung des Flachbohrers für Durchgangsbohrungen werden darüber hinaus gratarme Bohrungsränder erzeugt.

Ein weiterer wesentlicher Vorteil der vollständig planen Orientierung der Schneide mit einer endseitigen Schneidkante ist darin zu sehen, dass der Bohrer problemlos auch an gekrümmten Flächen angesetzt werden kann, ohne dass dieser - anders als bei einer kegelförmigen Bohrerspitze - stark abgedrängt wird.

Aufgrund der durchgehenden, senkrecht zur Bohrerlängsachse orientierten Schneide wird über den gesamten Bohrdurchmesser ein gleichmäßiger, in einer Ebene liegender Spanabtrag erzielt.

Weiterhin sind die Hauptschneiden - bezogen auf die Schneidrichtung des Bohrers - hinter einer Mittenlinie angeordnet, die in der Ebene senkrecht zur Bohrerlängsachse liegt und durch die Bohrermitte läuft. Die jeweiligen Hauptschneiden liegen hierbei insbesondere um einen halben Kerndurchmesser versetzt zur Mittenlinie. Durch diese Maßnahme können die Hauptschneiden problemlos mit einer Schleifscheibe geschliffen werden, ohne dass beim Schleifen der einen Hauptschneide die zweite Hauptschneide berührt wird.

Zweckdienlicherweise verlaufen hierbei die Hauptschneiden geradlinig, so dass die Schneide annähernd entlang einer Linie verläuft. Hierdurch sind die auf den Bohrer einwirkenden Kräfte symmetrisch verteilt, so dass beim Bohren der Bohrer nur geringe Seitenkräfte erfährt, wodurch die Bohrlochgeometrie negativ beeinflusst werden würde.

Vorzugsweise sind die beiden Hauptschneiden in einem Stirnzentrum der Bohrerstirn über eine Restquerschneide miteinander verbunden, so dass die Hauptschneiden in der Ebene senkrecht zur Bohrerlängsachse zueinander versetzt sind. Die Restquerschneide weist dabei eine nur geringe Ausdehnung auf, so dass der Versatz nur geringfügig ist. Der Versatz entspricht hierbei annähernd einem Kerndurchmesser des Stirnzentrums. Dieser Kemdurchmesser und damit auch der Versatz variiert hierbei mit dem Bohrerdurchmesser und nimmt zweckdienlicherweise in etwa degressiv ansteigend mit diesem zu. Für Bohrerdurchmesser von etwa 3 bis 30 mm beträgt der Kemdurchmesser bevorzugt etwa zwischen 0,05 bis 0,35 mm. Der Kerndurchmesser bestimmt sich hierbei vorzugsweise nach der mit einem konstanten Faktor gewichteten Wurzel aus dem Bohrerdurchmesser.

Durch die Anordnung der Restquerschneide im Bohrerzentrum in Verbindung mit dem parallelen Versatz der Hauptschneiden wird ein vereinfachtes Anschleifen der zwei Hauptschneiden ermöglicht. Zugleich wird im Bereich des Bohrerzentrums eine ausreichende Festigkeit erzielt. Durch die nur sehr geringe Ausdehnung der Querschneide und damit des Kerndurchmessers ist zudem auch im Zentrum eine wirksame Spanabtrennung ohne überhöhtes Quetschen erreicht. Der so genannte Zentrumspan kann damit wirksam abgetragen werden, wodurch Verquetschungen im Bereich der Bohrermitte vermieden sind. Dem gegenüber weisen herkömmliche Spiralbohrer eine deutlich höhere Kerndicke im Bereich der Bohrerspitze auf, die ebenfalls mit dem Bohrerdurchmesser ansteigt, wobei gemäß der DIN 1414-1 für einen Bohrerdurchmesser von 3 mm bereits eine minimale Kerndicke von etwa 0,5 mm und für einen Bohrerdurchmesser von etwa 30 mm eine minimale Kerndicke von etwa 3,5 mm vorgesehen ist.

Im Hinblick auf ein möglichst gutes Bohrergebnis und effizientem Spanabtrag verläuft der Übergang von der Hauptschneide über das Stirnzentrum in eine sich an das Stirnzentrum angrenzende, der weiteren Hauptschneide zugeordnete Freifläche entlang einem Stirnlückenradius. Dieser nimmt vorzugsweise mit zunehmendem Bohrerdurchmesser zu und liegt im Bereich von 0,5 bis 4,2 mm für Bohrerdurchmesser von 3 bis 30 mm.

Für ein möglichst einfaches Anschleifen ist zudem vorgesehen, dass sich an die jeweilige Hauptschneide eine erste Freifläche mit einem ersten Freiflächenwinkel und daran anschließend eine zweite Freifläche mit einem im Vergleich zum ersten Freiflächenwinkel größeren Freiflächenwinkel aufweist. Die der jeweiligen Hauptschneide zugeordneten Freiflächen bilden hierbei in etwa zueinander geneigte ebene Dachflächen mit unterschiedlichen Neigungswinkeln. Durch die vergleichsweise flache erste Freifläche weist die Bohrerstirn im Bereich der Hauptschneiden eine ausreichend hohe Materialstärke auf und ist daher ausreichend stabil. Der an der Hauptschneide gebildete Schneidkeil, welcher begrenzt ist von der Freifläche und der Spanfläche, welche an der Hauptschneide zusammenstoßen, ist daher stabil ausgebildet. Zweckdienlicherweise liegt hierbei der erste Freiflächenwinkel im Bereich zwischen 4 und 10° und der zweite Freiflächenwinkel im Bereich zwischen 8 und 20°. Die Wahl des Winkels ist hierbei materialabhängig. Für einen Bohrer, der für Stahl ausgelegt ist, liegen diese beiden Winkel insbesondere bei etwa 6° bzw. 12°.

Vorzugsweise ist weiterhin vorgesehen, dass die Breite der ersten Freifläche von einer Zentrumsbreite im Bereich der Bohrermitte zu einer Außenbreite am Bohreraußenumfang zunimmt. Prinzipiell wird eine möglichst große Breite der ersten Freifläche angestrebt, um den Schneidkeil möglichst stabil auszuführen. Gleichzeitig darf jedoch aufgrund der geringen Neigung die Breite nicht zu groß sein, da ansonsten der Freiraum für den abzutragenden Span nicht ausreichen würde. Aufgrund der Verringerung der Breite der ersten Freifläche zur Bohrermitte hin wird hierbei insbesondere das problematische Abführen des Zentrumspans berücksichtigt. Bevorzugt nimmt die Breite der ersten Freifläche mit zunehmendem Bohrerdurchmesser zu und liegt für die Zentrumsbreite etwa zwischen 0,03 und 0,4 mm und für die Außenbreite etwa zwischen 0,15 und 0,9 mm für Bohrerdurchmesser zwischen 3 und 30 mm. Die Breite nimmt hierbei insbesondere degressiv zu, und zwar kontinuierlich mit zunehmendem Bohrerdurchmesser über die gesamte Länge der Freifläche.

Im Hinblick auf die Problematik des sicheren Abführens der Zentrumspäne ist zweckdienlicherweise weiterhin eine so genannte Ausspitzung einer jeweiligen Spannut an der Bohrerstirn vorgesehen. Diese Ausspitzung wird durch ein Anschleifen vorgenommen. Durch die Ausspitzung ist im Bereich der Bohrerstirn jeweils eine Stirnlücke ausgebildet. Für einen effektiven Spanabtransport weist diese Ausspitzung hierbei mehrere Merkmale auf, die vorzugsweise in Kombination verwirklicht sind.

Zum einen ist zweckdienlicherweise vorgesehen, dass die Ausspitzung über eine senkrecht zu den Hauptschneiden orientierte Mittenlinie hinaus reicht. Die Ausspitzung, also der Freiraum für die abzutragenden Späne, erstreckt sich über die der Ausspitzung zugeordnete Hauptschneide bis in den Bereich der Restquerschneide und sogar vorzugsweise bis in den Bereich der zweiten Hauptschneide. Weiterhin ist zweckdienlicherweise vorgesehen, dass die Ausspitzung zur Bohrerlängsachse einen Winkel zwischen etwa 20 bis 40°, insbesondere von etwa 30° einschließt. Dieser Winkel ist hierbei vorzugsweise ungefähr gleich einem Drallwinkel der Spannut, also des Winkels, unter dem die Randlinie der jeweiligen Spannut bezüglich der Bohrerlängsachse verläuft. Durch diese Maßnahme neigt sich die radiale Tiefe der Ausspitzung im Verlauf der Bohrerlängsachse. Hierdurch wird der Span effektiv von der Bohrermitte aus in die gewendelte Spannut eingeleitet.

Bevorzugt weist die Ausspitzung zudem einen vergleichsweise großen Öffnungswinkel von etwa 70° +/- 15° auf.

An die jeweilige Hauptschneide schließt sich zur jeweiligen Spannut hin eine Spanfläche an. Diese ist unter einem Spanwinkel von vorzugsweise etwa -8 bis +10° angeordnet. Der Spanwinkel gibt den Winkel zwischen der Spanfläche und einer parallel zur Bohrer-Längsachse verlaufenden Ebene an. Der Spanwinkel ist also ein Maß für eine Abweichung der Spanfläche von der parallel zur Bohrerlängsachse verlaufenden Ebene. Ein positiver Spanwinkel bedeutet hierbei einen spitzen Schneidkeil; ein negativer Spanwinkel einen stumpfen Schneidkeil. Die Spanfläche wird hierbei zweckdienlicherweise beim Schleifen gemeinsam mit der Ausspitzung vorgenommen. Da die Ausspitzung in die bereits bestehenden Spannut erfolgt, wird beim Schleifen die vorhandene Spanfläche verändert. Es erfolgt also eine so genannte "Spanwinkelkorrektur". Die mit der Ausspitzung erzeugte korrigierte Spanfläche im Anschluss an die Hauptschneide weist in Bohrerlängsrichtung vorzugsweise eine Ausdehnung auf, die etwa das Doppelte des Vorschubwerts pro Umdrehung der Schneide beträgt, für den der Bohrer vorgesehen ist.

In einer bevorzugten Weiterbildung läuft für eine gleichmäßige Spanabführung die Spanfläche zu einer Nebenschneide aus. Die Spanfläche weist hierbei im Auslaufbereich zur Nebenschneide eine Spanflächenbreite im Bereich von etwa 0,10 bis 0,70 mm für Bohrerdurchmesser von etwa 3-30 mm auf.

Aufgrund der vollständig plan verlaufenden Schneide weist der Bohrer keine eine Zentrierfunktion übernehmende vordere Spitze auf. Gemäß einer zweckdienlichen Weiterbildung ist daher vorgesehen, dass für eine geeignete Führung des Bohrers eine Doppelfase am Bohrerumfang vorgesehen ist. Hierzu sind an beiden Randseiten eines zwischen den Spannuten verlaufenden Stegs Führungsfasen angebracht. Die Führungsfasen bestimmen dabei den Bohreraußenumfang.

Ebenfalls zu Zwecken einer geeigneten Führung des Bohrers ist vorgesehen, dass die jeweilige Hauptschneide über eine gerundet und bevorzugt angeschrägt ausgebildete Eckenschneide in eine jeweilige entlang der Spannut verlaufende Nebenschneide übergeht. Durch diese abgeschrägte oder abgerundete Ausbildung der Eckenschneide erfolgt insbesondere beim Anbohren eine Selbstzentrierung des Bohrers. Um die damit verbundene Rundung oder Abschrägung des Bohrgrunds des gebohrten Lochens möglichst gering zu halten, beträgt die Höhe der Rundung bzw. der Schräge parallel zur Bohrerlängsachse etwa 0,15 bis 0,80 mm für einen Bohrerdurchmesser von 3-30mm.

Weiterhin ist zweckdienlicherweise vorgesehen, dass sich an die Eckenschneide eine Eckenschneide-Freifläche für einen sicheren Spanabtrag anschließt. Die Freifläche kann hierbei aus zwei Teil-Freiflächen oder einer gekrümmten Freifläche bestehen.

Ein Ausführungsbeispiel der Erfindung wird im Folgenden anhand der Figuren näher erläutert. Es zeigen jeweils:
- Fig. 1A: einen Bohrer in einer Seitenansicht,
- Fig. 1B: ein mit dem Bohrer hergestelltes Sackloch in einem Werkstück,
- Fig. 2A: die Bohrerstirn in einer Vorderansicht,
- Fig. 2B: eine vergrößerte Darstellung des mit einer Ellipse gekennzeichneten Bereichs in der Fig. 2a,
- Fig. 3A: eine Seitenansicht der Bohrerstirn mit Stirnlücke,
- Fig. 3B: eine Schnittansicht der Hauptschneide gemäß dem Schnitt III-III in Fig. 3a,
- Fig. 4: eine perspektivische Darstellung der Bohrerstirn mit Stirnlücke,
- Fig. 5: eine weitere Seitendarstellung der Bohrerstirn mit Eckenschneide,
- Fig. 6A,6B: Schnittdarstellungen für unterschiedliche Ausgestaltungen im Bereich der Eckenschneide gemäß der Schnittansicht VI-VI in Fig. 5,
- Fig. 7: eine Draufsicht auf die Eckenschneide gemäß Fig. 5 mit einem Eckenradius.

In den Figuren sind gleich wirkende Merkmale mit den gleichen Bezugszeichen versehen.

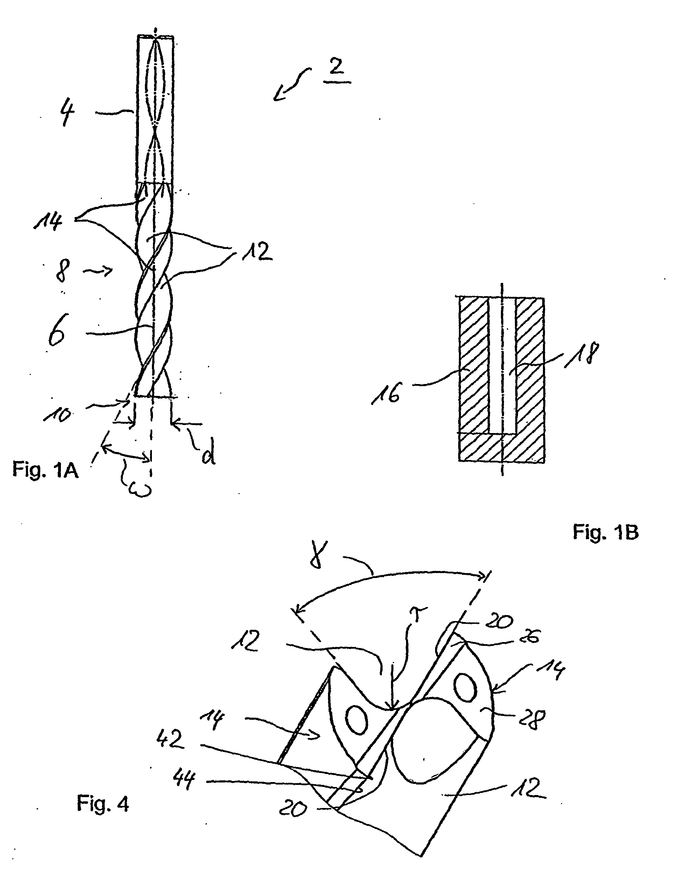

Der als Wendel- oder Spiralbohrer ausgebildete Bohrer 2 gemäß Fig. 1A umfasst einen Schaft 4, einen sich daran entlang einer Längsachse 6 des Bohrers anschließenden Körper 8, der an seinem vorderen Ende eine Bohrerstirn 10 aufweist. In den Körper 8 sind wendelförmig verlaufende Spahkammern oder Spannuten 12 eingearbeitet, zwischen denen jeweils ein Steg 14 ausgebildet ist. Die Spannuten 12 sind bezüglich der Längsachse 6 unter einem Drallwinkel ω orientiert. Der Bohrer weist eine Bohrerdurchmesser d auf, der in Richtung zum Schaft 4 leicht abnimmt.

Wie aus Fig. 1A unmittelbar hervorgeht, ist die Bohrerstirn 10 vollkommen plan ausgebildet und spannt eine Ebene senkrecht zur Längsachse 6 auf. Mit einem derartigen Bohrer 2 lässt sich in einem Werkstück 16 ein Sackloch 18 mit vollständig planem Bohrgrund einarbeiten, wie aus Fig. 1B hervorgeht.

Mit der vollständig planen Ausgestaltung der Bohrerstirn 10 wird zudem auch ein einfaches Anbohren selbst von gekrümmten Oberflächen ermöglicht, da aufgrund des Fehlens der bei einem herkömmlichen Spiralbohrer üblichen kegelförmigen Bohrerspitze kein Abgleiten an der gekrümmten Oberfläche erfolgt.

Mit der vollständig planen Ausgestaltung im Schneidbereich der Bohrerstirn 10 und aufgrund des Verzichts auf die sonst übliche kegelförmige Bohrerspitze bestehen besondere Anforderungen an die Selbstzentrierung bzw. Führung des Bohrers 2 sowie an eine zuverlässige Spanabfuhr, insbesondere des so genannten Zentrumspans. Um eine gute Führung des Bohrers zu erzielen und eine zuverlässige Spanabfuhr zu gewährleisten, weist der Bohrer 2 eine Vielzahl von Merkmalen auf, die insbesondere in ihrem kombinatorischen Zusammenwirken ein sicheres und zuverlässiges Bohren mit gutem Bohrergebnis erlauben.

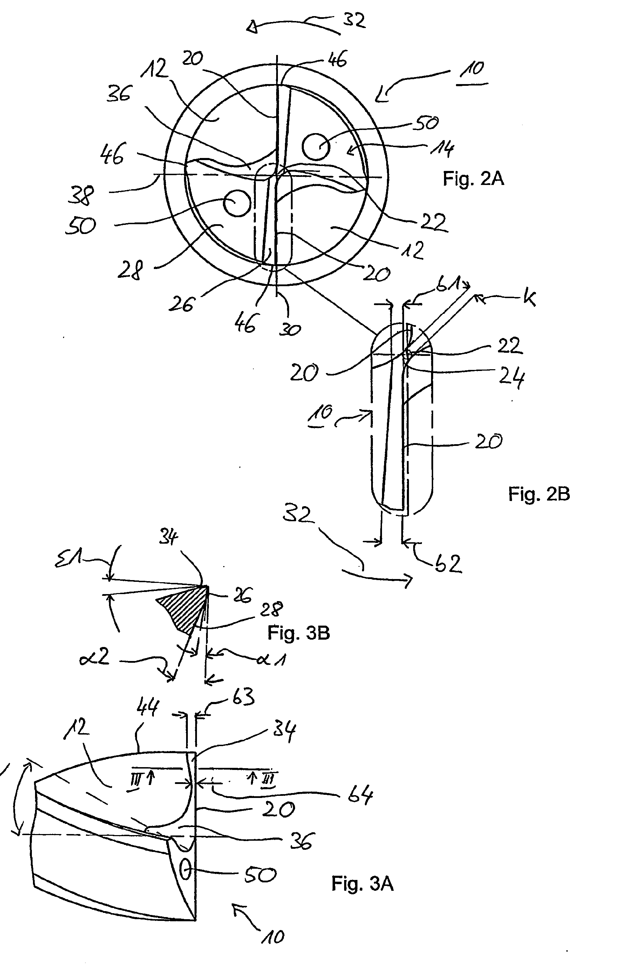

Wie insbesondere aus den Fig. 2A und 2B hervorgeht, weist der Bohrer 2 an seiner Bohrerstirn 10 zwei Hauptschneiden 20 auf, die über eine Restquerschneide 22 ineinander übergehen. Die Hauptschneiden 20 sowie die Restquerschneide 22 bilden eine gemeinsame Schneide, die vollständig in der Ebene senkrecht zur Längsachse 6 verläuft. Die Hauptschneiden 20 sind hierbei geradlinig ausgebildet und liegen - bis auf einen geringen durch die Restquerschneide 22 bedingten Versatz - im Wesentlichen auf einer Linie. In dem durch die Restquerschneide 22 gebildeten Übergangsbereich zwischen den beiden Hauptschneiden 20 ist nur eine äußerst geringe Materialstärke vorhanden. In der Bohrermitte 24 weist die Bohrerstirn 10 einen hier kreisförmig darstellten Kerndurchmesser k auf, der im Vergleich zu den üblichen Kerndurchmessern bei Spiralbohrern sehr klein gehalten ist.

An die Hauptschneiden 20 schließt sich jeweils eine zweiteilig ausgebildete Freifläche an, die gebildet ist aus einer ersten Freifläche 26 und einer zweiten Freifläche 28. Der ersten Freifläche 26 ist dabei ein erster Freiflächenwinkel *α*1 und der zweiten Freifläche 28 ein zweiter Freiflächenwinkel *α*2 zugeordnet, wie sich insbesondere aus der Schnittdarstellung gemäß Fig. 3B entnehmen lässt. Die erste Freifläche 26 weist eine von der Bohrermitte 24 zur Bohreraußenseite zunehmende Breite auf. Dabei weist die erste Freifläche 26 im Bereich des Zentrums eine Zentrumsbreite b1 und am Außenumfang eine Außenbreite b2 auf.

Wie insbesondere aus der Fig. 2B hervorgeht, ist die jeweilige Hauptschneide 20 von einer durch die Bohrermitte 24 hindurchgehenden Mittenlinie 30 beabstandet, und zwar ist die jeweilige Hauptschneide 20 in einer Schneidrichtung 32 gesehen nach der Mittenlinie 30 angeordnet. Die Schneidrichtung 32 gibt die normale Drehrichtung des Bohrers 2 an.

Diese Ausgestaltung mit der Anordnung der Hauptschneiden 20 nach Mitte sowie die Ausgestaltung mit der zweiteiligen Freifläche 26,28 ermöglicht ein besonders gutes Anschleifen der gewünschten Schneidengeometrie des Bohrers 2. Durch die hintermittige Anordnung der Hauptschneiden 20 wird nämlich die Gefahr vermieden, dass beim Schleifen der einen Hauptschneide 20 die andere Hauptschneide 20 berührt und somit evtl. wieder stumpf geschliffen wird. Auch die Ausgestaltung der zweiteiligen Freifläche 26,28 begünstigt das Anschleifen. Durch den größeren zweiten Freiflächenwinkels α2 wäre nämlich ein Schleifen bis hin zur Bohrermitte 24 nur schlecht möglich, da hierdurch insbesondere die Bohrermitte 24 mit dem nur geringen Kerndurchmesser k geschwächt würde. Durch den vergleichsweise flachen ersten Freiflächenwinkel *α*1 ist der Bohrer 2 im Bereich der Hauptschneide 20 ausreichend dick und damit stabil ausgebildet. Es ist damit ein ausreichend stabiler Schneidkeil erzielt. Ein derartiger Schneidkeil ist in der Fig. 3B dargestellt. Der Schneidkeil wird hierbei gebildet durch die Freiflächen 26,28 und einer sich an die Hauptschneide 20 in der Spannut 12 verlaufende Spanfläche 34.

Ein besonderes Problem besteht bei Bohrern generell in einer zuverlässigen Spanabfuhr, insbesondere des Zentrumspans, da hier keine oder nur eine geringfügige Relativbewegung zwischen dem Bohrer 2 und dem Werkstück 16 erfolgt. Bei dem hier beschriebenen Bohrer 2 mit der planen Schneidengeometrie bestehen besondere Anforderungen an die Spanabfuhr.

Um eine zuverlässige Spanabfuhr zu ermöglichen ist eine besondere Ausspitzung 36 (vgl. insbesondere Fig. 2A, 3A) insbesondere in Verbindung mit dem nur sehr geringen Kerndurchmesser k im Bereich der Restquerschneide 22 vorgesehen. Zur Erzielung der Ausspitzung 36 wird im Bereich der Bohrerstirn 10 üblicherweise eine geeignet geformte Schleifscheibe in die Spannut 12 eingeführt. Dadurch wird die bereits vorhandene Spannut 12 bzw. der Spanwinkel ε1 "korrigiert" (vgl. Fig. 3B). Als Ergebnis bildet sich die Ausspitzung 36 aus, die hier als ein bestimmter Flächenverlauf im an die jeweilige Hauptschneide 20 angrenzenden Bereich der Spannut 12 verstanden wird. Der Verlauf der Ausspitzung ist insbesondere aus den Fig. 2A, 3A, 4 und 5 zu entnehmen.

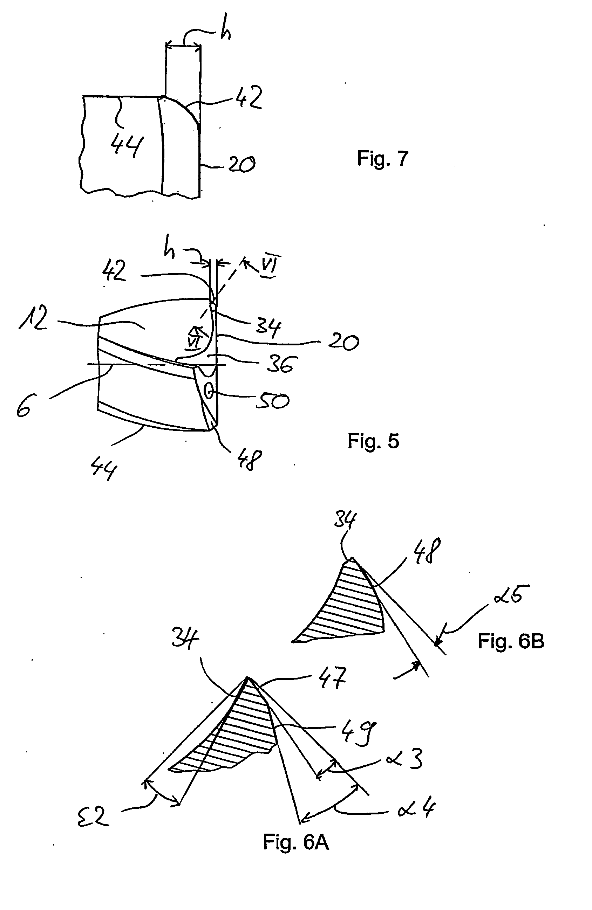

Die gesamte Ausspitzung 36, auch als Stirnlücke bezeichnet, weist hierbei einen in Fig. 4 eingezeichneten Öffnungswinkel *γ* auf. Dieser ist sehr groß gewählt und liegt im Bereich von etwa 70°.

Die Ausspitzung 36 erstreckt sich über Mitte, wie aus Fig. 2A hervorgeht. Hierunter wird verstanden, dass die Ausspitzung 36 über eine weitere Mittenlinie 38 hinausreicht, die senkrecht zu der ersten Mittenlinie 30 und damit senkrecht zum Verlauf der Hauptschneiden 20 orientiert ist. Wie insbesondere aus der Fig. 2A zu entnehmen ist, erstreckt sich die der einen Hauptschneiden 20 zugeordnete Ausspitzung 36 nahezu bis auf eine dem Kerndurchmesser k entsprechende Höhe, auf der die andere Hauptschneide 20 beginnt. Durch diese Maßnahme hat ein im Zentrum abgehobener Span einen sehr großen Freiraum, in den er zur Spanabfuhr gelangen kann. Der Verlauf der Ausspitzung 36 im Bereich des Stirnzentrums ist hierbei durch einen Stirnlückenradius r gebildet (Fig. 4). Dieser nimmt mit zunehmendem Bohrerdurchmesser d zu und liegt im Bereich von 0,5 bis 4,2 mm für Bohrerdurchmesser d zwischen 3 und 30 mm.

Bezogen auf die Längsachse 6 des Bohrers verläuft die Ausspitzung 36 unter einen Ausspitzungswinkel *δ* von etwa 30° (Fig. 3A). Dieser Ausspitzungswinkel *δ* verläuft nahezu parallel mit dem Drallwinkel ω, unter dem die Spannut 12 gegenüber der Längsachse 6 orientiert ist. Der Ausspitzungswinkel *δ* ist daher nahezu so groß wie der Drallwinkel ω. Dadurch läuft die Ausspitzung 36 in Richtung der Längsachse 6 aus, d.h. die radiale Tiefe der Ausspitzung 36 nimmt in Längsrichtung des Bohrers 2 ab. Durch diese Maßnahme wird der Span vorteilhaft in die beiden Spannuten 12 abgeführt.

Direkt an der Hauptschneide 20 angrenzend enthält und definiert die Ausspitzung 36 zudem die Spanfläche 34, wie insbesondere aus Fig. 3A und Fig. 5 hervorgeht. Diese Spanfläche 34 reicht bis zu einer Eckenschneide 42, die einen Übergang zwischen der Hauptschneide 20 zu einer Nebenschneide 44 (Fig. 3A, Fig. 4, Fig. 5) bildet. Die Spanfläche 34 weist eine zur Nebenschneide 44 hin auslaufende Spanflächenbreite b3 und in einem mittleren Bereich eine minimale Spanflächenbreite b4 auf. Die Spanflächenbreite b4 orientiert sich hierbei insbesondere an den Vorschub, für den der Bohrer 2 ausgelegt ist. Und zwar beträgt die Spanflächenbreite b4 vorzugsweise das Doppelte oder gegebenenfalls mehr als das Doppelte des Vorschubs pro Umdrehung des Bohrers 2. Die Spanflächenbreite b3 liegt insbesondere im Bereich von 0,1 bis 0,7mm für Bohrerdurchmesser d von etwa 3-30 mm und die minimale Spanflächenbreite b4 sollte für den genannten Bereich des Bohrerdurchmessers d 0,05 bis 0,25 mm nicht unterschreiten. Bei der Verwendung von Leichtmetallwerkstoffen, z.B. Aluminium, kann die Spanflächenbreite b3 auch 0 betragen.

Wie aus Fig. 5 zu entnehmen ist, ist die Ausspitzung 36 im Bereich der Spanfläche 34 insbesondere derart ausgebildet, dass das in Richtung der Längsachse 6 auslaufende Ende der Spanfläche 34 in den Übergangspunkt von der Eckenschneide 42 in die Nebenschneide 44 auftrifft. Dadurch wird ein harmonischer und gleichmäßiger Übergang erzielt.

Die Spanfläche 34 ist unter einem Spanwinkel *ε*1 bezüglich einer parallel zur Längsachse 6 verlaufenden Ebene angeordnet, wie insbesondere aus Fig. 3B zu entnehmen ist. Als Spanwinkel *ε*1 ist in Abhängigkeit des zu bohrenden Materials ein Winkel zwischen -8 bis +10° eingestellt. In Fig. 3B ist hierbei ein positiver Spanwinkel *ε*1 eingezeichnet, so dass insgesamt ein spitz zulaufender Schneidkeil gebildet ist, d.h. der Winkel zwischen der Ebene senkrecht zur Bohrerlängsachse 6 und der Spanfläche 34 ist kleiner 90°. Ein negativer Spanwinkel bedeutet einen stumpf zulaufenden Schneidkeil mit einem Winkel größer 90°. Die Spanflächenbreite b3 liegt bei negativer Ausrichtung noch etwas unterhalb der oben angegebenen Werten.

Bei dem Bohrer 2 mit der planen Schneidgeometrie sind weiterhin einige bevorzugte Maßnahmen vorgesehen, durch die insbesondere in ihrer Kombination eine sehr gute Führung des Bohrers 2 erzielt ist. Zunächst ist hierbei vorgesehen, dass der Bohrer 2 doppelfasig ausgebildet ist. Hierunter wird verstanden, dass an den beiden Randseiten der Stege 14 jeweils eine Führungsfase 46 vorgesehen ist, wie insbesondere aus der Fig. 2A hervorgeht. Durch die Führungsfasen 46 wird der Bohrer 2 im Bohrloch zentral geführt. Die Führungsfaser 46 bilden hierbei gegenüber der restlichen Außenfläche der Stege 14 eine stegartige Erhebung am Bohrerumfang. Die Führungsfasen 46 legen daher den Bohreraußenumfang fest.

Wie aus Fig. 2A ferner zu entnehmen ist, endet die Ausspitzung 36 beabstandet vor der an dem jeweiligen Steg 14 rückwärtigen, also der Hauptschneide 20 abgewandten Führungsfase 46. Damit wird sichergestellt, dass diese Fase 46 beim Schleifen der Ausspitzung 36 nicht beschädigt wird.

Weiterhin ist für eine gute Führung eine geeignete Geometrie der Eckenschneiden 42 vorgesehen. Und zwar sind diese abgeschrägt ausgebildet, wie aus Fig. 5 hervorgeht oder abgerundet ausgebildet, wie aus der vergrößerten Darstellung gemäß Fig. 7 hervorgeht. Durch die Abschrägung oder Abrundung wird eine gewisse Selbstzentrierung des Bohrers bewirkt. Zugleich wird damit die Kantengeometrie des Sacklochs 18 im Bereich des Bohrgrunds eingestellt. Je nach gewünschter Kantengeometrie können hierbei unterschiedliche Formen vorgesehen sein.

Im Hinblick auf das angestrebte Ziel eines möglichst planen Bohrgrunds beträgt die Höhe h dieser Rundung bzw. Schräge jedoch nur etwa 0,15 - 0,80 mm für Bohrerdurchmesser d von 3 - 30 mm (vgl. Fig. 5).

Um im Bereich der Eckenschneide 42 einen geeigneten Spanabtransport zu gewährleisten, sind an den Eckenschneiden 42 Eckenschneiden-Freiflächen 48 vorgesehen, wie aus den Fig. 6A und 6B hervorgeht. Gemäß der Fig. 6A ist die Eckenschneide-Freifläche 48 aus zwei Teil-Freiflächen 47, 49 gebildet, vergleichbar mit der ersten und der zweiten sich an die jeweilige Hauptschneide 20 anschließenden Freifläche 26,28. Gemäß Fig. 6B ist die Freifläche 48 gerundet als Hinterschliff ausgebildet.

Die sich an die Eckenschneide 42 anschließende erste Teil-Freifläche 47 ist unter einem ersten Teil-Freiflächenwinkel α 3 und die sich an diese Freifläche 47 anschlie-ßende zweite Teil-Freifläche 49 ist unter einem zweiten, größeren Teil-Freiflächenwinkel α 4 angeordnet. Der erste Teil-Freiflächenwinkel α 3 liegt hierbei vorzugsweise in Abhängigkeit des zu zerspanenden Werkstoffes im Bereich zwischen 4° und 12°.

Bei der zweiten gemäß Fig. 6B dargestellten Variante ist die Freifläche 48 unter einem Freiflächenwinkel α 5 orientiert, welcher wiederum in Abhängigkeit des zu zerspanenden Werkstoffs und insbesondere auch in Abhängigkeit des Bohrerdurchmessers d im Bereich von 3° bis 10° ausgeführt ist.

Wie insbesondere aus der Fig. 6B zu entnehmen ist, erstreckt sich die Spanfläche 34 in Richtung zu den jeweiligen Spannuten 12. Die Breite der Spanfläche liegt hierbei in Abhängigkeit des zu zerspanenden Werkstoffs in einem Bereich von 0,05 bis 0,30 mm. Die Spanfläche 34 ist im Bereich der Eckenschneide 42 unter einem Eckenschneidenspanwinkel ε 2 (vgl. Fig. 6A) angeordnet, der zerspanstoffabhängig im Bereich von - 8° bis + 8° ausgeführt ist.

Zur Kühlung des Bohrers 2 weist dieser in den Körper 8 eingearbeitete Kühlmittelbohrungen 50 auf, wie insbesondere aus der Fig. 2A zu entnehmen ist. Um einen störungsfreien Spanabtransport zu gewährleisten, ist ferner vorgesehen, dass die durch die Spannuten 12 gebildete Spankammer einen mit zum Schaft 4 hin zunehmenden Spanabgangsquerschnitt aufweist. D.h. der senkrecht zur Längsachse 6 gebildete Querschnitt der jeweiligen Spannut 12 vergrößert sich in Richtung zum Schaft hin. Dies wird entweder durch eine so genannte Kernverjüngung und/oder durch eine so genannte Spankammeröffnung erreicht.

Der hier beschriebene Flachbohrer zeichnet sich durch sehr gute Bohreigenschaften aus und bietet dadurch ein besonders leistungsfähiges Bearbeitungswerkzeug für unterschiedliche Anforderungen. Hervorzuheben sind hierbei insbesondere die Eignung für die Erzeugung von planen Sacklöchern, für die Herstellung von gratarmen Durchgangsbohrungen, die Möglichkeit des Bohransatzes auch an gekrümmten Oberflächen sowie die gute Zentrierfähigkeit. Diese Eigenschaften werden durch die spezielle geometrische Ausgestaltung des Flachbohrers erreicht. Neben der Ausgestaltung und die Anordnung der Hauptschneiden 20 sind insbesondere die spezielle Geometrie der Ausspitzung 36, der doppelten Führungsfasen 46, der Eckenschneiden 42, sowie der Spanfläche 34 von Bedeutung.

## Patentansprüche

1. Bohrer (2), insbesondere Spiralbohrer, mit einem Spannuten (12) aufweisenden Körper (8) sowie mit einer Bohrerstirn (10), die zwei ineinander übergehende Hauptschneiden (20) aufweist, die eine durchgehende Schneide bilden, die in einer Ebene senkrecht zur Bohrerlängsachse (6) verläuft,
**dadurch gekennzeichnet,**
**dass** die Hauptschneiden (20) bezogen auf eine Schneidrichtung (32) hinter einer Mittenlinie (30) angeordnet sind, die in der Ebene senkrecht zur Bohrerlängsachse (6) liegt und durch die Bohrermitte (24) sowie in Richtung der Hauptschneiden (20) verläuft,

2. Bohrer (2) nach Anspruch 1,
**dadurch gekennzeichnet,**
**dass** die Hauptschneiden (20) geradlinig verlaufen.

3. Bohrer (2) nach Anspruch 1 oder 2,
**dadurch gekennzeichnet,**
**dass** die beiden Hauptschneiden (20) in einem Stirnzentrum der Bohrerstim (10) über eine Restquerschneide (22) miteinander verbunden sind, so dass die Hauptschneiden (20) in der Ebene senkrecht zur Bohrerlängsachse (6) zueinander versetzt sind.

4. Bohrer (2) nach Anspruch 3,
**dadurch gekennzeichnet,**
**dass** das Stirnzentrum einen Kerndurchmesser (k) aufweist, der mit dem Bohrerdurchmesser (d) etwa linear zunimmt und im Bereich von 0,05 bis 0,35 mm für Bohrerdurchmesser (d) von etwa 3 bis 30 mm liegt.

5. Bohrer (2) nach einem der vorhergehenden Ansprüche,
**dadurch gekennzeichnet,**
**dass** die Hauptschneide (20) über das Stirnzentrum mit einer Freifläche (28) entlang einer Kreislinie mit einem Stirnlückenradius (r) verbunden ist, wobei der Stirnlückenradius (r) insbesondere etwa von 0,5 auf 4,2 mm für Bohrerdurchmesser (d) von 3 auf 30 mm zunimmt.

6. Bohrer (2) nach einem der vorhergehenden Ansprüche,
**dadurch gekennzeichnet,**
**dass** sich an die jeweilige Hauptschneide (20) eine erste Freifläche (26) mit einem ersten Freiflächenwinkel (α1) und daran anschließend eine zweite Freifläche (28) mit einem im Vergleich zum ersten Freiflächenwinkel (α1) größeren zweiten Freiflächenwinkel (α2) anschließt.

7. Bohrer (2) nach Anspruch 6,
**dadurch gekennzeichnet,**
**dass** der erste Freiflächenwinkel (α1) im Bereich zwischen 4 bis 10°, insbesondere bei etwa 6°, und der zweite Freiflächenwinkel (α2) im Bereich zwischen 8 bis 20°, insbesondere bei etwa 12°, liegt.

8. Bohrer (2) nach Anspruch 6 oder 7,
**dadurch gekennzeichnet,**
**dass** die Breite der ersten Freifläche (26) von einer Zentrumsbreite (b1) im Bereich der Bohrermitte (24) zu einer Außenbreite (b2) am Bohreraußenumfang zunimmt.

9. Bohrer (2) nach Anspruch 8,
**dadurch gekennzeichnet,**
**dass** die Breite der ersten Freifläche (26) mit zunehmendem Bohrerdurchmesser (d) insgesamt zunimmt und dass für Bohrerdurchmesser (d) von etwa 3 bis 30 mm die Zentrumsbreite (b1) etwa zwischen 0,03 und 0,4 mm und die Außenbreite (b2) etwa zwischen 0,1,5 und 0,9 mm liegt.

10. Bohrer (2) nach einem der vorhergehenden Ansprüche,
**dadurch gekennzeichnet,**
**dass** die jeweilige Spannut (12) an der Bohrerstim (10) eine Ausspitzung (36) aufweist, die über eine senkrecht zu den Hauptschneiden (20) orientierte weitere Mittenlinie (38) hinausreicht.

11. Bohrer (2) nach Anspruch 10,
**dadurch gekennzeichnet,**
**dass** die Ausspitzung (36) zur Bohrerlängsachse (6) einen Ausspitzungswinkel (δ) zwischen etwa 20 bis 40 ° einschließt.

12. Bohrer (2) nach einem der vorhergehenden Ansprüche,
**dadurch gekennzeichnet,**
**dass** die jeweilige Spannut (12) an der Bohrerstim (10) eine Ausspitzung (36) ausbildet, die einen Öffnungswinkel (γ) - gesehen in einer Ebene senkrecht zur Bohrerlängsachse - von etwa 70° aufweist.

13. Bohrer (2) nach einem der vorhergehenden Ansprüche,
**dadurch gekennzeichnet,**
**dass** sich an die jeweilige Hauptschneide (20) zur jeweiligen Spannut (12) hin eine Spanfläche (34) anschließt, die zur Hauptschneide (20) einen Spanwinkel (ε) von -8 bis +10° aufweist.

14. Bohrer (2) nach Anspruch 13,
**dadurch gekennzeichnet,**
**dass** die Spanfläche (34) zu einer Nebenschneide (44) ausläuft und eine Spanflächenbreite (b3) im Bereich von etwa 0,10 bis 0,70 mm für Bohrerdurchmesser (d) von etwa 3-30 mm aufweist.

15. Bohrer (2) nach einem der vorhergehenden Ansprüche,
**dadurch gekennzeichnet,**
**dass** der Körper (8) zwischen den Spannuten (12) jeweils einen Steg (14) bildet, welcher an seinen beiden Randseiten zu den Spannuten (12) jeweils eine Führungsfase (46) aufweist.

16. Bohrer (2) nach einem der vorhergehenden Ansprüche,
**dadurch gekennzeichnet,**
**dass** die jeweilige Hauptschneide (20) über eine gerundet oder angeschrägt ausgebildete Eckenschneide (42) in eine jeweilige entlang der Spannut (12) verlaufenden Nebenschneide (44) übergeht.

17. Bohrer (2) nach Anspruch 16,
**dadurch gekennzeichnet,**
**dass** die Höhe (h) der Rundung bzw. Schräge - gesehen in Richtung der Bohrerlängsachse (6) - etwa 0,15 bis 0,80 für Bohrerdurchmesser (d) von etwa 3 bis 30 mm beträgt.

18. Bohrer (2) nach Anspruch 16 oder 17,
**dadurch gekennzeichnet,**
**dass** sich an die Eckenschneide (42) eine Eckenschneide-Freifläche (48) anschließt.

## Claims

1. Drill (2), in particular twist drill, having a body (8) which has flutes (12) and having a drill face side (10) which has two main cutting edges (20) which merge into one another and form one continuous cutting edge which runs in a plane perpendicular to the bore longitudinal axis (6),
**characterized**
**in that** the main cutting edges (20) are arranged, in relation to a cutting direction (32), behind a central line (30) which is situated in a plane perpendicular to the drill longitudinal axis (6) and runs through the drill centre (24) and in the direction of the main cutting edges (20).

2. Drill (2) according to Claim 1,
**characterized**
**in that** the main cutting edges (20) run rectilinearly.

3. Drill (2) according to Claim 1 or 2,
**characterized**
**in that** the two main cutting edges (20) are connected to one another in a face end centre of the drill face end (10) by means of a residual transverse cutting edge (22), such that the main cutting edges (20) are offset relative to one another in the plane perpendicular to the drill longitudinal axis (6).

4. Drill (2) according to Claim 3,
**characterized**
**in that** the face end centre has a core diameter (k) which increases approximately linearly with the drill diameter (d), and is in the range from 0.05 to 0.35 mm for drill diameters (d) of approximately 3 to 30 mm.

5. Drill (2) according to one of the preceding claims,
**characterized**
**in that** the main cutting edge (20) is connected via the face end centre to a flank (28) along a circular line with a face end gap radius (r), with the face end gap radius (r) increasing in particular from approximately 0.5 to 4.2 mm for drill diameters (d) of 3 to 30 mm.

6. Drill (2) according to one of the preceding claims,
**characterized**
**in that** the respective main cutting edge (20) is adjoined by a first flank (26) having a first flank angle (α1) and, adjoining the latter, by a second flank (28) having a second flank angle (α2) which is greater then the first flank angle (α1).

7. Drill (2) according to Claim 6,
**characterized**
**in that** the first flank angle (α1) is in the range from 4 to 10°, in particular is approximately 6°, and the second flank angle (α2) is in the range from 8 to 20°, in particular is approximately 12°.

8. Drill (2) according to Claim 6 or 7,
**characterized**
**in that** the width of the first flank (26) increases from a centre width (b1) in the region of the drill centre (24) to an outer width (b2) at the drill periphery.

9. Drill (2) according to Claim 8,
**characterized**
**in that** the width of the first flank (26) increases overall with increasing drill diameter (d), and in that, for drill diameters (d) of approximately 3 to 30 mm, the centre width (b1) is between approximately 0.03 and 0.4 mm, and the outer width (b2) is between approximately 0.15 and 0.9 mm.

10. Drill (2) according to one of the preceding claims,
**characterized**
**in that** the respective flute (12) has, at the drill face end (10), a point thinning (36) which extends beyond a further centre line (38) which is aligned perpendicular to the main cutting edges (20).

11. Drill (2) according to Claim 10,
**characterized**
**in that** the point thinning (36) encloses a point thinning angle (δ) with the drill longitudinal axis (6) of from approximately 20 to 40°.

12. Drill (2) according to one of the preceding claims,
**characterized**
**in that** the respective flute (12) forms, at the drill face end (10), a point thinning (36) which has an opening angle (γ) - as viewed in a plane perpendicular to the drill longitudinal axis - of approximately 70°.

13. Drill (2) according to one of the preceding claims,
**characterized**
**in that** the respective main cutting edge (20) is adjoined in the direction of the respective flute (12) by a rake face (34) which has a rake angle (ε) with respect to the main cutting edge (20) of -8 to +10°.

14. Drill (2) according to Claim 13,
**characterized**
**in that** the rake face (34) tapers to a secondary cutting edge (44), and has a rake face width (b3) in the range from approximately 0.10 to 0.70 mm for drill diameters (d) of approximately 3-30 mm.

15. Drill (2) according to one of the preceding claims,
**characterized**
**in that** the body (8) forms in each case one web (14) between the flutes (12), which web (14) has, at its two rim sides to the flutes (12), in each case one guide bevel (46).

16. Drill (2) according to one of the preceding claims,
**characterized**
**in that** the respective main cutting edge (20) merges via a rounded or chamfered corner cutting edge (42) into a respective secondary cutting edge (44) which runs along the flute (12).

17. Drill (2) according to Claim 16,
**characterized**
**in that** the height (h) of the rounding or chamfer - as viewed in the direction of the drill longitudinal axis (6) - is approximately 0.15 to 0.80 for drill diameters (d) of approximately 3 to 30 mm.

18. Drill (2) according to Claim 16 or 17,
**characterized**
**in that** a corner cutting edge flank (48) adjoins the corner cutting edge (42).

## Revendications

1. Foret (2), notamment foret hélicoïdal, comprenant un corps (8) présentant des goujures (12), ainsi qu'un front de foret (10) qui présente deux arêtes de coupe principales (20) se réunissant mutuellement et formant une arête de coupe continue qui s'étend dans un plan perpendiculaire à l'axe longitudinal (6) du foret,
**caractérisé en ce que** les arêtes de coupe principales (20) sont agencées, en se référant à une direction de coupe (32), derrière une ligne médiane (30), qui se situe dans le plan perpendiculaire à l'axe longitudinal (6) du foret et qui s'étend par le centre (24) du foret et dans la direction des arêtes de coupe principales (20).

2. Foret (2) selon la revendication 1, **caractérisé en ce que** les arêtes de coupe principales (20) s'étendent de manière rectiligne.

3. Foret (2) selon la revendication 1 ou 2, **caractérisé en ce que** les deux arêtes de coupe principales (20) sont reliées l'une à l'autre au niveau d'un centre de front du front de foret (10), par l'intermédiaire d'une arête de coupe résiduelle transversale (22), de sorte que les arêtes de coupe principales (20) sont décalées mutuellement dans le plan perpendiculaire à l'axe longitudinal (6) du foret.

4. Foret (2) selon la revendication 3, **caractérisé en ce que** le centre du front présente un diamètre d'âme (k) qui augmente environ linéairement avec le diamètre (d) du foret, et se situe dans une plage de 0,05 à 0,35 mm pour des diamètres (d) du foret allant d'environ 3 à 30 mm.

5. Foret (2) selon l'une des revendications précédentes, **caractérisé en ce que** l'arête de coupe principale (20) est reliée par l'intermédiaire du centre du front à une surface de dépouille (28) le long d'une ligne circulaire avec un rayon de creux de front (r), le rayon de creux de front (r) augmentant notamment environ de 0,5 à 4,2 mm pour des diamètres (d) du foret allant de 3 à 30 mm.

6. Foret (2) selon l'une des revendications précédentes, **caractérisé en ce qu'**à chaque arête de coupe principale (20) respectivement considérée se raccorde une première surface de dépouille (26) avec un premier angle de surface de dépouille (α₁), et se raccordant à celle-ci, une deuxième surface de dépouille (28) avec un deuxième angle de surface de dépouille (α₂) plus grand comparé au premier angle de surface de dépouille (α₁).

7. Foret (2) selon la revendication 6, **caractérisé en ce que** le premier angle de surface de dépouille (α₁) se situe dans une plage entre 4 et 10°, plus particulièrement à environ 6°, et le deuxième angle de surface de dépouille (α₂) se situe dans une plage entre 8 et 20°, plus particulièrement à environ 12°.

8. Foret (2) selon la revendication 6 ou 7, **caractérisé en ce que** la largeur de la première surface de dépouille (26) augmente d'une largeur centrale (b₁) dans la région du centre (24) du foret, à une largeur extérieure (b₂) au niveau de la périphérie du foret.

9. Foret (2) selon la revendication 8, **caractérisé en ce que** la largeur de la première surface de dépouille (26) augmente globalement avec l'accroissement du diamètre (d) du foret, et **en ce que** pour des diamètres (d) de foret d'environ 3 à 30 mm, la largeur centrale (b₁) se situe environ entre 0,03 et 0,4 mm et la largeur extérieure (b₂) environ entre 0,15 et 0,9 mm.

10. Foret (2) selon l'une des revendications précédentes, **caractérisé en ce que** la goujure (12) respectivement considérée présente au niveau du front (10) du foret, un amincissement en pointe (36) qui s'étend au-delà d'une autre ligne médiane (38) orientée perpendiculairement aux arêtes de coupe principales (20).

11. Foret (2) selon la revendication 10, **caractérisé en ce que** l'amincissement en pointe (36) forme par rapport à l'axe longitudinal (6) du foret, un angle d'amincissement en pointe (δ) entre environ 20 à 40°.

12. Foret (2) selon l'une des revendications précédentes, **caractérisé en ce que** la goujure (12) respectivement considérée forme, au niveau du front (10) du foret, un amincissement en pointe (36), qui présente, vu dans un plan perpendiculaire à l'axe longitudinal du foret, un angle d'ouverture (γ) d'environ 70°.

13. Foret (2) selon l'une des revendications précédentes, **caractérisé en ce qu'**à chaque arête de coupe principale (20) respectivement considérée, se raccorde en direction de la goujure (12) respective, une face de coupe ou d'attaque (34) qui présente relativement à l'arête de coupe principale (20), un angle de coupe ou angle d'attaque (ε) de -8 à +10°.

14. Foret (2) selon la revendication 13, **caractérisé en ce que** la face de coupe (34) débouche sur une arête de coupe auxiliaire (44) et présente une largeur (b₃) de face de coupe dans une plage d'environ 0,10 à 0,70 mm pour des diamètres (d) du foret d'environ 3-30 mm.

15. Foret (2) selon l'une des revendications précédentes, **caractérisé en ce que** le corps (8) forme entre les goujures (12) respectivement une nervure (14) qui présente sur ses deux bords latéraux vers les goujures (12), respectivement un chanfrein de guidage (46).

16. Foret (2) selon l'une des revendications précédentes, **caractérisé en ce que** chaque arête de coupe principale (20) respectivement considérée se raccorde, par l'intermédiaire d'une arête de coupe de coin (42) de configuration arrondie ou en biais, à une arête de coupe auxiliaire (44) respective s'étendant le long de la goujure (12).

17. Foret (2) selon la revendication 16, **caractérisé en ce que** la hauteur (h) de l'arrondi ou respectivement du biais, vu dans la direction de l'axe longitudinal (6) du foret, vaut environ 0,15 à 0,80 pour des diamètres (d) de foret d'environ 3 à 30 mm.

18. Foret (2) selon la revendication 16 ou 17, **caractérisé en ce qu'**à l'arête de coupe de coin (42) se raccorde une surface de dépouille d'arête de coupe de coin (48).
